# EUROPÄISCHE PATENTSCHRIFT

(11) **EP 1 282 996 B1**
(45) Veröffentlichungstag und Bekanntmachung des Hinweises auf die Patenterteilung: **20.07.2005**
(21) Anmeldenummer: 01943085.9
(22) Anmeldetag: 16.05.2001
(51) Int. Cl.: H04Q 7/38

(54) **VERFAHREN UND VORRICHTUNG IN EINEM FUNK-KOMMUNIKATIONSSYSTEM ZUM VERBESSERN DER ÜBERTRAGUNGSQUALITÄT NACH EINEM AUFBAU EINER UNTERBROCHENEN VERBINDUNG (V), INSBESONDERE ZUM VERRINGERN VON ABSCHNEIDUNG UND VERZÖGERUNG BEI ÜBERTRAGUNG VON SPRACHDATEN ÜBER PAKETDATENKANÄLE**
METHOD AND DEVICE IN A RADIO COMMUNICATION SYSTEM FOR IMPROVING THE TRANSMISSION QUALITY AFTER RE-ESTABLISHING AN INTERRUPTED CONNECTION (V), AND ESPECIALLY FOR REDUCING INTERRUPTION AND DELAYS IN THE TRANSMISSION OF PACKET DATA CHANNELS
PROCEDE ET DISPOSITIF D'UN SYSTEME DE RADIOCOMMUNICATION DESTINES A AMELIORER LA QUALITE DE TRANSMISSION APRES L'ETABLISSEMENT D'UNE COMMUNICATION INTERROMPUE (V), NOTAMMENT A REDUIRE L'INTERRUPTION ET LE DELAI EN CAS DE TRANSMISSION DE DONNEES PAROLE PAR DES CANAUX DE PAQUETS DE DONNEES

(30) Priorität: 19.05.2000 DE 10024864
(43) Veröffentlichungstag der Anmeldung: 12.02.2003
(73) Patentinhaber: Siemens Aktiengesellschaft, 80333 München (DE)
(72) Erfinder: MENZEL, Christian, 82216 Maisach (DE)
(86) Internationale Anmeldenummer: PCT/DE2001/001850
(87) Internationale Veröffentlichungsnummer: WO 2001/089247

(56) Entgegenhaltungen:
- EP-A- 0 584 904
- US-A- 5 157 728
- US-A- 5 555 447

## Beschreibung

Verfahren und Vorrichtung in einem Funk-Kommunikationssystem zum Verbessern der Übertragungsqualität nach einem Aufbau einer unterbrochenen Verbindung (V), insbesondere zum Verringern von Abschneidung und Verzögerung bei Übertragung von Sprachdaten über Paketdatenkanäle

Die Erfindung betrifft ein Verfahren mit den oberbegrifflichen Merkmalen des Anspruchs 1 in einem Funk-Kommunikationssystem zum Verbessern der Übertragungsqualität nach einem Aufbau einer unterbrochenen Verbindung, insbesondere zum Verringern von Abschneidung und Verzögerung bei Übertragung von VAD-Sprachdaten (VAD: Voice Activity Detection) über Paketdatenkanäle bzw. eine Vorrichtung zum Durchführen des Verfahrens.

In Funk-Kommunikationssystemen werden Informationen (beispielsweise Sprache, Bildinformationen oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMA- oder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Sowohl in derzeit üblichen GSM-Systemen (GSM: Global System for Mobile Communication) und den geplanten Erweiterungen des GSM-Standards als auch im UMTS- oder UTRAN-Standard (UTRAN: Universal Terrestrial Radio Access Network) mit TDD- und FDD-Übertragungsmodi (T/FDD: Time/Frequency Division Duplex) sollen zukünftig insbesondere für Sprachübertragungen sogenannte Echtzeit-Daten über paketorientierte Verbindungen übertragen werden. Unter Echtzeit-Daten werden Daten verstanden, die so wenig wie möglich durch Laufzeitverzögerungen, Abschneidungsverluste oder dergleichen beeinträchtigt sind.

Dabei besteht das Ziel, während Pausen ohne Übertragung von Nutzdaten, also insbesondere während Sprachpausen, die durch sprachaktivierte Erkennung (VAD) detektiert werden, den physikalischen Übertragungskanal (physical channel) auszulösen, um ihn für diese Zeit anderen Verbindungen zur Verfügung zu stellen.

Für die während der Pause ausgelöste Verbindung muss am Ende der Pause der physikalische Kanal wieder zur Verfügung gestellt werden. Bei Abwärtsverbindungen (Downlink) kann das ohne weitere Probleme schnell geschehen, da z.B. eine sendende Basisstation weiß, was für Daten sie zu übertragen hat und an wen sie Daten zu übertragen hat. Sind Daten über eine Sprachverbindung an eine mobile Station zu übertragen, so kann sie jederzeit eine geeignete Verbindung einrichten. Problematisch ist jedoch das zur Verfügungstellen einer Datenverbindung in einer Aufwärtsverbindung (Uplink), weil die mobile Station erst das Netz über das Ende der Sprachpause informieren muss und danach noch warten muss, bis das Netz der mobilen Station wieder einen physikalischen Kanal zuweist.

Hierzu werden Aufwärtsverbindungs-Schnellzugriffsmechanismen (sogenannte Fast Uplink Access Mechanismen) verwendet, aber auch diese verursachen noch Zugriffsverzögerungen (access delay), welche derzeit in der Größenordnung von 40 ms bis 100 ms liegen. Solche Zugriffsverzögerungen sind insbesondere bei Sprachverbindungen nicht vernachlässigbar und erfordern Maßnahmen, um ihre Wahrnehmbarkeit zu verringern bzw. zu verhindern.

Derzeit werden zwei grundlegende Möglichkeiten erörtert, diese Zugriffsverzögerungen zu kompensieren:
1. Die Sprache wird nach der Detektion des Endes der Sprachpause solange verzögert, bis der Aufwärtsverbindungs-kanal wieder verfügbar ist.
   Dies führt jedoch für die gesamte Dauer dieser Sprachphase zu einer Verzögerung der Übertragung in der obengenannten Größenordnung. Die Qualität wird dabei in der Weise beeinträchtigt, dass die Pausenlänge, bis der Sprecher nach einem Sprachphasenende die Antwort seines Gesprächspartners hört, sowohl in Aufwärtsverbindungs- als auch in Abwärtsverbindungs-Richtung genau um die Dauer dieser Verzögerung verlängert wird. Qualitätsmäßig entspricht dies dem gleichen Effekt, wie bei Telefonverbindungen über geostationäre Satelliten.
2. Nach der Detektion des Endes einer Sprachpause wird die vorliegende Sprachinformation solange gelöscht, bis der Aufwärtsverbindungs-Kanal wieder verfügbar ist. Danach werden die Sprachinformationen unverzögert übertragen.
   Bei dieser Variante kommt es zum sogenannten Klipping, d.h. die Anfänge aller Sprachphasen werden über die Dauer der obengenannten Verzögerungszeit abgeschnitten.

Während bei Variante 1 derzeit Verzögerungen von bis zu ca. 80 ms als tolerierbar angesehen werden, ist bei Variante 2 die Toleranzschwelle nach derzeitigem Empfinden schon bei ca. 30 ms erreicht. Bezüglich der 80 ms bei Variante 1 ist jedoch zu beachten, dass praktisch noch weitere Verzögerungen durch Leitungen und Vermittlungsstellen zwischen zwei miteinander kommunizierenden Teilnehmern hinzukommen. Als tolerierbarer Wert für Variante 1 wird derzeit praktisch ein Wert kleiner 80 ms angesehen.

Das Dokument US 5,157,728 beschreibt ein Kommunikationssystem, welches Verzögerungen, die durch die Speicherung eines Sprachsignals hervorgerufen werden, eliminiert. Hierzu wird zumindest ein Teil des gespeicherten Signals gelöscht. Die Löschung erfolgt unter der Voraussetzung, dass die zu löschenden Teile aus Sprechpausen, welche durch geringe Signalintensität gekennzeichnet sind, oder Wiederholungen bestehen.

Das Dokument US 5,555,447 beschreibt ein Verfahren zur Versendung von Sprachinformation, bei welchem die Versendung der Sprache verzögert beginnt. Um diese Verzögerung auszugleichen, wird der erste Teil der Sprache komprimiert. Die Kompression kann derart erfolgen, dass Sprachpausen ausgelassen werden, oder dass periodisch Segmente ausgelassen werden.

Bei derzeitigen Mobilfunksystemen wird Sprache allgemein in kodierter Form in sogenannten Sprachrahmen, die z.B. ein 20 ms langes Sprachsample enthalten, übertragen. Dabei kann der durch Übertragungsfehler vorkommende Verlust eines einzelnen Sprachrahmens durch Extrapolation der Inhalte eines gerade zu verarbeitenden und vorangegangener Sprachrahmen bzw. -samples ohne Qualitätseinbußen kompensiert werden.

Die Aufgabe der Erfindung besteht darin, die Verbindungsqualität zu verbessern, insbesondere das Klipping zu verringern bzw. zu verhindern und gleichzeitig aber auch die Verzögerung zu kompensieren.

Diese Aufgabe wird durch das Verfahren mit den Merkmalen des Patentanspruchs 1 bzw. eine Vorrichtung zum Durchführen eines solchen Verfahrens gemäß den Merkmalen des Patentanspruchs 9 gelöst. Vorteilhafte Ausgestaltungen sind Gegenstand von abhängigen Ansprüchen.

Durch das gezielte Auslassen einzelner Daten verarbeitet eine empfangende Station den empfangenen Datenfluß in der herkömmlichen Weise. Dadurch wird bei Sprachverbindungen die Wahrnehmung der Abfolgen von Klipping und Verzögerung insbesondere für den mobilen Teilnehmer reduziert, weil zwar nicht die Verzögerung des Anfanges einer Sprachphase verhindert wird, aber die Verzögerung des Endes einer Sprachphase verhindert wird. Dies ist besonders für Gespräche zwischen mobilen Teilnehmern von Vorteil, weil die Akkumulation von Verzögerungen der Anfänge und Enden der Sprachphasen beider Teilnehmer verhindert und auf die Verzögerung der Anfänge reduziert wird.

Dass die zeitlich voneinander beabstandeten Daten zueinander Abstände aufweisen, die automatisch bestimmt werden, ermöglicht eine automatische Anpassung an momentane Gegebenheiten im Gesamtsystem. Vorteilhafterweise kann die Bestimmung der Abstände abhängig von einer momentanen Auslastung des Funk-Kommunikationsnetzes, von der Dauer der jeweiligen Gesamtverzögerung, von einer erforderlichen Übertragungsqualität der aufgebauten Verbindung, von einer Empfangsleistung bei der empfangenden Station und/oder von einer zu erwartenden Fehlerrate bei der Übertragung erfolgen.

Falls die zeitlich voneinander beabstandeten Daten zueinander Abstände aufweisen, die zwischen einer unteren und/oder einer oberen Grenze bestimmt werden, insbesondere abhängig von der Größe der Gesamtverzögerung, von der Länge von Übertragungs- bzw. Sprachrahmen und/oder von der Länge von Übertragungs- bzw. Sprachphasen, kann eine Mindestqualität sichergestellt werden.

Zu Beginn ein beschränktes Klipping durchzuführen bietet die Möglichkeit, die Reduzierung der Verzögerungszeit zu Beginn zu beschleunigen.

Ein weiterer Vorteil des hier beschriebenen Verfahrens besteht darin, dass auf der Empfängerseite keine zusätzlichen Anforderungen an einen Sprachdecoder oder andere Baueinheiten zu stellen sind. Damit kann das Verfahren in einem Mobilfunksystem von einer Mobilstation benutzt werden, ohne dass hierfür besondere Vorkehrungen auf der Netz- oder der Empfängerseite getroffen werden müssen.

Ein Ausführungsbeispiel wird nachfolgend anhand der Zeichnung näher erläutert. Es zeigen:
- Fig. 1: ein beispielhaftes Funk-Kommunikationssystem mit zwei miteinander kommunizierenden mobilen Stationen und
- Fig. 2: schematisch eine Übertragung von Sprachrahmen zum Verbessern der Übertragungsqualität beim Wiederaufbau der Verbindung nach einer Sprachpause.

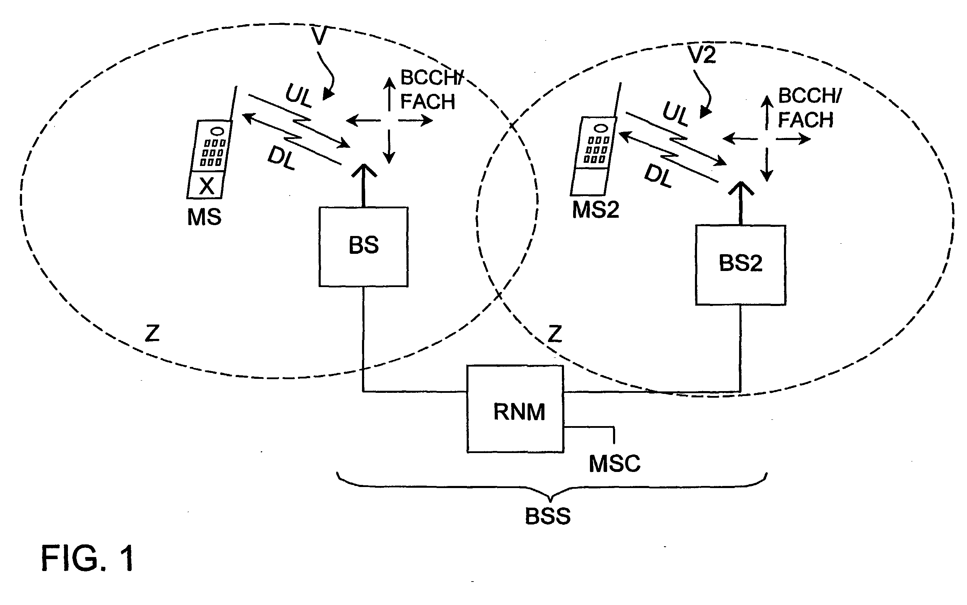

Das in Fig. 1 dargestellte Mobilfunksystem als Beispiel eines bekannten Funk-Kommunikationssystems besteht aus einer Vielzahl von Netzelementen, insbesondere von Mobilvermittlungsstellen MSC, Einrichtungen RNM zum Zuteilen von funktechnischen Ressourcen, Basisstationen BS und in der untersten Hierarchieebene Teilnehmerstationen MS.

Die Mobilvermittlungsstellen MSC, die untereinander vernetzt sind und von denen hier nur eine dargestellt ist, stellen den Zugang zu einem Festnetz oder einem anderen Funknetz her. Weiterhin sind diese Mobilvermittlungsstellen MSC mit jeweils zumindest einer der Einrichtungen RNM zum Zuteilen von funktechnischen Ressourcen verbunden. Jede dieser Einrichtungen RNM ermöglicht wiederum eine Verbindung zu zumindest einer Basisstation BS, BS2. Eine solche Basisstation BS kann über eine Funkschnittstelle V bzw. V2 eine Verbindung zu Teilnehmerstationen, z.B. mobilen Stationen MS bzw. MS2 oder anderweitigen mobilen und stationären Endgeräten aufbauen. Durch jede Basisstation BS, BS2 wird zumindest eine Funkzelle Z gebildet. Bei einer Sektorisierung oder bei hierarchischen Zellstrukturen werden pro Basisstation BS, BS2 auch mehrere Funkzellen Z versorgt.

In Fig. 1 sind beispielhaft bestehende Verbindungen V als Abwärtsverbindungen DL und Aufwärtsverbindungen UL zur Übertragung von Nutzinformationen und Signalisierungsinformationen zwischen einer mobilen Station MS bzw. MS2 und den entsprechend mit diesen in Verbindung stehenden Basisstationen BS bzw. BS2 dargestellt. Weiterhin ist jeweils ein Organisationskanal (FACH oder BCCH: Broadcast Control CHannel) dargestellt, der zur Übertragung von Nutz- und Signalisierungsinformationen mit einer definierten Sendeleistung von jeder der Basisstationen BS bzw. BS2 für alle mobilen Stationen MS bzw.

MS2 im Bereich der entsprechenden Funkzelle Z bereitgestellt wird.

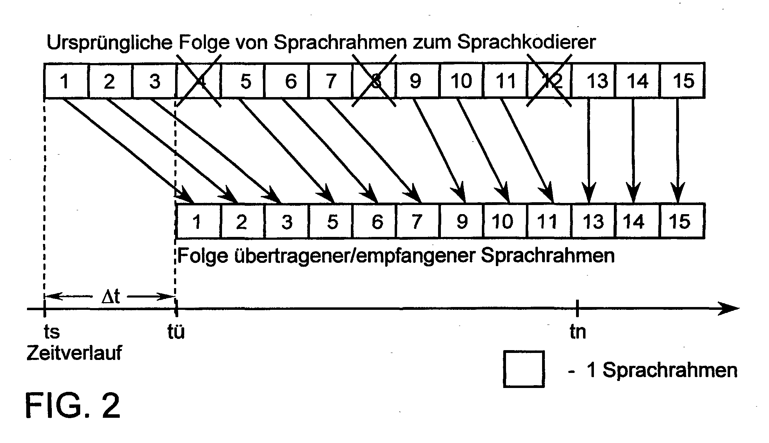

Anhand von Fig. 2 wird zunächst ein Verfahren Verbesserung der Übertragungsqualität bei Verbindungen, wie hier insbesondere Sprachverbindungen nach einem Wiederaufbau einer unterbrochenen Verbindung erläutert. Eine Unterbrechung der Verbindung kann dabei insbesondere durch eine ungewöhnlich lange und unbeabsichtigte Störung der Funkverbindung oder durch ein gezieltes Unterbrechen der Verbindung in einer Sprachpause verursacht sein.

Die in Fig. 2 dargestellte obere Abfolge von Übertragungsrahmen, die hier jeweils einen Sprachrahmen symbolisieren, zeigt die Abfolge von 15 aufeinanderfolgenden Rahmen. Die Daten dieser fünfzehn Rahmen enthalten Informationen über Sprachsignale in der zeitlichen Abfolge, in der die Sprachsignale ab einem Sprachbeginn ts aufgezeichnet und in für sich bekannter Art und Weise z.B. an einen Sprachkodierer oder eine mit dem Sender (MS) kommunizierende Station (BS) weitergeleitet werden.

Die in Fig. 2 dargestellte untere Abfolge von Übertragungsrahmen zeigt die Abfolge von 12 Rahmen. Die Daten dieser zwölf Rahmen enthalten Informationen über die Sprachsignale in der zeitlichen Abfolge, in der die Sprachsignale ab einem Übertragungsbeginn tü verfahrensgemäß tatsächlich z.B. an den Sprachkodierer und/oder die mit dem Sender (MS) kommunizierende Station (BS) übertragen weitergeleitet werden. Dabei entsteht zwischen Sprachbeginn ts und Übertragungsbeginn tü bis zum Aufbau der Verbindung, insbesondere der Aufwärtsverbindung zum Übertragen der Daten eine Gesamtverzögerung Δt. Übliche systembedingte Verzögerungen sind in Fig. 2 aus Gründen der Übersichtlichkeit nicht dargestellt.

Zur Verbesserung der Übertragungsqualität bei einer derart verzögert aufgebauten Verbindung wird die Weiterleitung bzw.

Verarbeitung der ersten Abfolge von Sprachrahmen 1 - 11 ab dem Signal- bzw. Sprachbeginn ts bzw. mit anderen Worten nach dem Ende einer Sprachpause so lange verzögert, bis der physikalische Kanal zur Verfügung steht (tü). Dadurch wird das Klipping vermieden.

Nachdem der physikalische Kanal zur Verfügung steht und die Weiterleitung bzw. Übertragung der Daten begonnen hat, werden jedoch in gewissen Abständen Übertragungsrahmen, hier Sprachrahmen, aus der weitergeleiteten bzw. verarbeiteten Abfolge herausgelassen. Dadurch wird die Gesamtverzögerung Δt bis zu einem Synchron-Zeitpunkt tn allmählich auf einen Wert von Null hin verringert bzw. abgebaut. Das Herauslassen von Sprachrahmen erfolgt natürlich nur solange bis die Verzögerung eingeholt ist. Ab dem Synchron-Zeitpunkt tn erfolgt dann eine vollständige Übertragung aller Übertragungsrahmen bzw. Daten.

Dabei können die Abstände, in denen Übertragungsrahmen aus der Abfolge herausgelassen werden, vorbestimmbar festgelegt werden. Alternativ können die Abstände aber auch automatisch bestimmt werden. Kriterien, von denen eine solche automatische Abstimmung abhängen kann, können beispielsweise die momentane Auslastung des Kommunikationsnetzes bzw. die Dauer der jeweiligen Gesamtverzögerung Δt oder die erforderliche Übertragungsqualität der aufgebauten Verbindung sein. Aber auch eine Abhängigkeit von der Empfangsleistung beim Empfänger der über die Verbindung gesendeten Daten oder die zu erwartende Fehlerrate bei der Übertragung können als Kriterien berücksichtigt werden.

Während bei dem dargestellten Ausführungsbeispiel jeder vierte Übertragungsrahmen ausgelassen wurde, kann in der praktischen Anwendung gemäß den derzeitigen Vorstellungen minimal jeder zehnte Sprachrahmen der ursprünglichen Abfolge herausgelassen werden. Bei kleineren Werten, z.B. jedem fünften Sprachrahmen, würde die Qualität übertragener Sprache jedoch erheblich verschlechtert, zumal auf der Funkschnittstelle V generell mit fehlerhaft übertragenen Sprachrahmen gerechnet werden muss.

Wenn jedoch beispielsweise nur jeder einhundertste Sprachrahmen herausgelassen wird, so dauert es nach derzeitigen Vorstellungen eventuell zu lange, bis die Gesamtverzögerung Δt eingeholt wird. Damit ergibt sich praktisch auch eine obere Grenze. Diese obere Grenze hängt insbesondere von der Größe der Gesamtverzögerung Δt durch einen vorteilhafterweise schnellen Aufwärtsverbindungszugriff (Fast Uplink Access), der Länge der Übertragungs- bzw. Sprachrahmen und der Länge der Sprachphasen ab.

Wenn z.B. 90% der Sprachphasen mindestens 1 Sekunde dauern, ein Sprachrahmen 20 ms lang ist und die maximale Gesamtverzögerung Δt drei Sprachrahmen - also 60 ms - lang dauert, so ergäbe sich für das obere Limit ein Wert von 1000 ms / 60 ms bzw. von 50 Sprachrahmen / 3 Sprachrahmen = 16. D.h. maximal nur jeder 16-te Sprachrahmen könnte herausgelassen werden.

Es ist vorteilhafterweise auch möglich, zu Beginn einer Sprachphase noch nicht sofort jeden z.B. 10-ten Sprachrahmen herauszulassen, sondern z.B. mit dem 30-sten zu beginnen und das Herauslassen dann mit dem 40-sten, 50-sten usw. fortzusetzen. Dadurch kann die Qualität der übertragenen Sprache mit Abnehmender Verzögerung allmählich erhöht werden.

Vorteilhaft ist auch eine Kombination mit einem gewissen tolerierbaren Klipping, was z.B. dem Fall entspricht, dass direkt einer oder mehrere der ersten Sprachrahmen herausgelassen werden. Dies beschleunigt den Abbau der Verzögerung bei der Übertragung.

Wie aus Fig. 1 ersichtlich, werden zur Durchführung des Verfahrens entsprechende Einrichtungen X zum gezielten Herauslassen von ursprünglich zu übertragenden Daten oder Übertragungsrahmen in den sendenden Stationen, insbesondere den mobilen Teilnehmerstationen MS eingerichtet.

Vorteilhafterweise müssen an den übrigen Einrichtungen des Kommunikationssystems keine Änderungen vorgesehen werden. Auch müssen die empfangenden Teilnehmerstationen MS2 nicht unbedingt mit solchen Einrichtungen X zum gezielten Herauslassen von ursprünglich zu übertragenden Daten ausgestattet sein. Bei den Zwischenstationen BS, RNM, BS2 und der empfängerseitigen Station MS2 können die empfangenen Daten so behandelt werden, als seien sie in der bisher bekannten Art und Weise übertragen worden.

Als Kommunikationssystem können nicht nur Funk-Kommunikationssysteme herangezogen werden, sondern es ist auch eine Anwendung des vorstehend beschriebenen Verfahrens auf beispielsweise drahtgebundene Kommunikationssysteme möglich, insbesondere dann, wenn sich mehrere sendende Stationen eine Übertragungressource teilen. Auch auf Multiplexverbindungen ist das Verfahren anwendbar.

## Patentansprüche

1. Verfahren zum Verbessern der Übertragungsqualität bei Verbindungen (V) in einem Kommunikationssystem nach einem Aufbau einer Verbindung (V) zwischen einer sendenden Station (MS) und einer empfangenden Station (BS),
- wobei die Verarbeitung und Übertragung von einer Abfolge zu übertragender Daten (1-15) senderseitig erst nach einer Verzögerung (Δt) beginnt,
- wobei vor der Verarbeitung und/oder Übertragung zeitlich voneinander beabstandete Daten (4, 8, 12) aus der Abfolge zu übertragender Daten (1 - 15) herausgelassen werden,
**dadurch gekennzeichnet,**
**dass** die zeitlich voneinander beabstandeten Daten (4, 8, 12) zueinander Abstände aufweisen, die automatisch bestimmt werden, wobei
die Bestimmung der Abstände abhängig von einer momentanen Auslastung des Kommunikationsnetzes und/oder von der Dauer der jeweiligen Gesamtverzögerung (Δt) und/oder von einer erforderlichen Übertragungsqualität der aufgebauten Verbindung (V) und/oder von einer Empfangsleistung bei der empfangenden Station (BS) und/oder von einer zu erwartenden Fehlerrate bei der Übertragung erfolgt.

2. Verfahren nach Anspruch 1, bei dem
die zeitlich voneinander beabstandeten Daten (4, 8, 12) Übertragungsrahmen einer paketorientierten Kommunikationsverbindung sind.

3. Verfahren nach Anspruch 1 oder 2, bei dem
als die zeitlich voneinander beabstandeten Daten (4, 8, 12) Sprachdaten verarbeitet und/oder übertragen werden.

4. Verfahren nach einem vorstehenden Anspruch, bei dem
das Herauslassen der zeitlich voneinander beabstandeten Daten (4, 8, 12) bis zu einem Zeitpunkt (tn) erfolgt, zu dem die Verzögerung (Δt) zwischen den ursprünglich zu verarbeitenden bzw. zu übertragenden Daten (13 - 15) und den momentan zu verarbeitenden bzw. zu übertragenden Daten (13 - 15) abgebaut ist.

5. Verfahren nach einem vorstehenden Anspruch, bei dem
die zeitlich voneinander beabstandeten Daten (4, 8, 12) nach dem Aufbau der Verbindung (V) über eine von der empfangenden Station (BS) bereitgestellte Aufwärtsverbindung (UL) herausgelassen werden.

6. Verfahren nach einem vorstehenden Anspruch, bei dem
der Aufbau der Verbindung (V) als ein Wiederaufbau zumindest eines physikalischen Übertragungskanals einer zuvor bestehenden Verbindung (V) erfolgt.

7. Verfahren nach einem vorstehenden Anspruch, bei dem
die zeitlich voneinander beabstandeten Daten (4, 8, 12) zueinander Abstände aufweisen, die zwischen einer unteren und/oder einer oberen Grenze bestimmt werden, insbesondere abhängig von der Größe der Gesamtverzögerung (Δt), von der Länge von Übertragungs- bzw. Sprachrahmen und/oder von der Länge von Übertragungs- bzw. Sprachphasen.

8. Verfahren nach einem vorstehenden Anspruch, bei dem
zu Beginn ein beschränktes Klipping durchgeführt wird.

9. Sendestation in einem Kommunikationssystem, insbesondere zum Durchführen eines Verfahrens nach einem vorstehenden Anspruch,
wobei das Kommunikationssystem zumindest die Sendestation, insbesondere eine Teilnehmerstation (MS), und zumindest eine empfangende Station, insbesondere eine Basisstation (BS), und zumindest eine Schnittstelle (V) zum Aufbau einer Verbindung (UL) zwischen diesen umfasst,
wobei eine Verzögerungseinrichtungen (X) in der Sendestation zum zeitverzögerten Verarbeiten und/oder Übertragen einer Abfolge von Daten (1 - 15) zu der entsprechenden empfangenden Station nach dem Aufbau der Verbindung (UL) vorhanden ist, welche zum Herauslassen zeitlich voneinander beabstandeter Daten (4, 8, 12) aus der Abfolge der zu übertragenden Daten (1 - 15) ausgebildet ist,
**gekennzeichnet durch**
Mittel zum automatischen Bestimmen der Abstände der beabstandeten Daten (4, 8, 12), wobei die Bestimmung der Abstände abhängig von einer momentanen Auslastung des Kommunikationsnetzes und/oder von der Dauer der jeweiligen Gesamtverzögerung (Δt) und/oder von einer erforderlichen Übertragungsqualität der aufgebauten Verbindung (V) und/oder von einer Empfangsleistung bei der empfangenden Station (BS) und/oder von einer zu erwartenden Fehlerrate bei der Übertragung erfolgt.

10. Sendestation nach Anspruch 9,
wobei die Sendestation eine mobile oder stationäre Teilnehmer-Funkstation (MS) ist.

## Claims

1. Method for improving transmission quality in connections (V) in a communication system after a connection (V) has been established between a transmitting station (MS) and a receiving station (BS),
- the processing and transmission of a sequence of data to be transmitted (1-15) only starting on the transmitter side after a delay (Δt),
- temporally separated data items (4, 8, 12) being omitted from the sequence of data to be transmitted (1-15) before processing and/or transmission,
**characterized in that**
the temporally separated data items (4, 8, 12) are separated from each other by time intervals, which are automatically determined,
the intervals being determined as a function of current utilization of the communication network and/or the duration of the respective overall delay (Δt) and/or the required transmission quality of the established connection (V) and/or the received power at the receiving station (BS) and/or the expected bit error rate during transmission.

2. Method according to Claim 1,
wherein the temporally separated data items (4, 8, 12) are transmission frames of a packet-oriented communication connection.

3. Method according to Claim 1 or 2,
wherein voice data is processed and/or transmitted as the temporally separated data items (4, 8, 12).

4. Method according to a preceding claim,
wherein omission of the temporally separated data items (4, 8, 12) takes place at a time (tn) when the delay (Δt) between the data (13-15) to be processed or transmitted originally and the data (13-15) to be processed or transmitted currently is reduced.

5. Method according to a preceding claim,
wherein the temporally separated data items (4, 8, 12) are omitted after the connection (V) has been established via an uplink (UL) provided by one of the receiving stations (BS).

6. Method according to a preceding claim,
wherein the establishment of the connection (V) takes place as the re-establishment of at least one physical transmission channel of a previously existing connection (V).

7. Method according to a preceding claim,
wherein the spatially separated data items (4, 8, 12) are at different intervals from each other, which are determined between a lower and/or an upper limit, in particular as a function of the length of the overall delay (Δt), the length of transmission or voice frames and/or the length of transmission or voice phases.

8. Method according a preceding claim,
in which limited clipping takes place at the start.

9. Transmitting station in a communication system, in particular for implementing a method according to a preceding claim,
the communication system comprising at least the transmitting station, in particular a user station (MS), and at least a receiving station, in particular a base station (BS), and at least an interface (V) for establishing a connection (UL) between these,
a delay device (X) being present in the transmitting station for time-delayed processing and/or transmission of a sequence of data (1-15) to the corresponding receiving station after the connection (UL) has been established, which is configured for the omission of temporally separated data items (4, 8, 12) from the sequence of data to be transmitted (1-15),
**characterized by**
means for automatic determination of the intervals between the separated data items (4, 8, 12), the intervals being determined as a function of current utilization of the communication network and/or the duration of the respective overall delay (Δt) and/or the required transmission quality of the established connection (V) and/or the received power at the receiving station (BS) and/or the expected bit error rate during transmission.

10. Transmitting station according to Claim 9,
the transmitting station being a mobile or stationary user radio station (MS).

## Revendications

1. Procédé destiné à améliorer la qualité de transmission en cas de liaisons (V) dans un système de communication après l'établissement d'une liaison (V) entre une station (MS) émettrice et une station (BS) réceptrice,
- le traitement et la transmission d'une séquence de données (1-15) à transmettre commençant côté émetteur seulement après une temporisation (Δt),
- des données (4, 8, 12) espacées les unes des autres dans le temps avant le traitement et/ou la transmission étant sorties de la séquence de données à transmettre (1-15),
**caractérisé en ce que**
les données (4, 8, 12) espacées les unes des autres dans le temps présentent des intervalles entre elles qui sont déterminés automatiquement,
le calcul des intervalles s'effectuant en fonction d'un taux d'utilisation momentané du réseau de communication et/ou de la durée de la temporisation globale (Δt) respective et/ou d'une qualité de transmission nécessaire de la liaison (V) établie et/ou d'une puissance de réception à la station réceptrice (BS) et/ou d'un taux d'erreurs à escompter lors de la transmission.

2. Procédé selon la revendication 1, dans lequel
les données (4, 8, 12) espacées les unes des autres dans le temps sont des cadres de transmission d'une liaison de communication orientée paquets.

3. Procédé selon la revendication 1 ou 2, dans lequel
des données de parole sont traitées et/ou transmises comme les données (4, 8, 12) espacées les unes des autres dans le temps.

4. Procédé selon une revendication précédente, dans lequel
la sortie des données (4, 8, 12) espacées les unes des autres dans le temps s'effectue jusqu'à un moment (tn) où la temporisation (Δt) entre les données (13-15) à traiter à l'origine resp. à transmettre et les données (13-15) à traiter resp. à transmettre instantanément est réduite.

5. Procédé selon une revendication précédente, dans lequel
les données (4, 8, 12) espacées les unes des autres dans le temps sont sorties après l'établissement de la liaison (V) au moyen d'une liaison ascendante (UL) mise à disposition par la station réceptrice (BS).

6. Procédé selon une revendication précédente, dans lequel
l'établissement de la liaison (V) s'effectue comme un rétablissement d'au moins un canal de transmission physique d'une liaison (V) existant auparavant.

7. Procédé selon une revendication précédente, dans lequel
les données (4, 8, 12) espacées les unes des autres dans le temps présentent entre elles des espacements qui sont calculés entre une limite inférieure et/ou une limite supérieure, en particulier en fonction de la grandeur de la temporisation globale (Δt), de la longueur des cadres de transmission ou des cadres de parole et/ou de la longueur des phases de transmission ou des phases de parole.

8. Procédé selon une revendication précédente, dans lequel
un écimage limité est effectué au début.

9. Station émettrice dans un système de communication, en particulier pour la mise en oeuvre d'un procédé selon une revendication précédente,
le système de communication comprenant au moins la station émettrice, en particulier une station d'abonné (MS), et au moins une station réceptrice, en particulier une station de base (BS), et au moins une interface (V) pour l'établissement d'une liaison (UL) entre celles-ci,
un appareil de temporisation (X) étant présent dans la station émettrice pour le traitement et/ou la transmission temporisé d'une séquence de données (1-15) à la station réceptrice correspondante après l'établissement de la liaison (UL), laquelle est réalisée pour la sortie de données (4, 8, 12) espacées les unes des autres dans le temps de la séquence de données à transmettre (1-15),
**caractérisé par**
des moyens pour le calcul automatique des espacements des données (4, 8, 12) espacées, le calcul des espacements s'effectuant en fonction d'un taux d'utilisation momentané du réseau de communication et/ou de la durée de la temporisation globale (Δt) respective et/ou d'une qualité de transmission nécessaire de la liaison (V) établie et/ou d'une puissance de réception à la station réceptrice (BS) et/ou d'un taux d'erreurs à escompter lors de la transmission.

10. Station émettrice selon la revendication 9,
la station émettrice étant une station radio d'abonné (MS) mobile ou fixe.
